# EUROPEAN PATENT SPECIFICATION

(11) **EP 2 594 766 B1**
(45) Date of publication and mention of the grant of the patent: **18.06.2014**
(21) Application number: 11189820.1
(22) Date of filing: 18.11.2011
(51) Int. Cl.: F02C 7/06, F02C 7/14, F02C 7/32, F16H 57/04

(54) **A gas turbine engine comprising a permanent magnet alternator with integrated cooling fan**
Gasturbine umfassend einen Permanent-Magnet-Generator mit integriertem Kühlgebläse
Turbine à gaz comprenant alternateur à aimant permanent avec ventilateur de refroidissement intégré

(43) Date of publication of application: 22.05.2013
(73) Proprietor: Hamilton Sundstrand Corporation, Windsor Locks, CT 06096-1010 (US)
(72) Inventor: Blewett, Michael R., Stillman Valley, IL Illinois 61084 (US); Hipsky, Harold W., Willington, CT Connecticut 06279 (US); Dyer, Gerald P., Enfield, CT Connecticut 06082 (US)
(74) Representative: Tomlinson, Kerry John

(56) References cited:
- EP-A1- 1 612 371
- EP-B1- 0 943 069
- WO-A2-02/37046
- US-A1- 2005 229 602

## Description

### BACKGROUND

The present invention relates to gas turbine engines, and in particular, to alternators on gas turbine engines. Gas turbine engines typically have at least one spool that includes a compressor and a turbine. An accessory gearbox is often connected to the spool, and provides gearing to connect the spool to various accessories, such as alternators, pumps, and engine starters, for example. Each accessory is typically connected directly to the gearbox. Thus, as more accessories are added to the gearbox, the size and weight of the gearbox can become undesirably large and heavy. This can be particularly undesirable in applications where space is a premium and weight is undesirable, such as with a gas turbine engine used on an aircraft.

Some gas turbine engines have a relatively small permanent magnet alternator (PMA) attached to the gearbox and driven by the spool. Such an alternator typically supplies electric power either primarily or exclusively to an engine controller. One or more larger generators typically power other systems on the aircraft. These permanent magnet alternators allow for an engine controller to have a relatively reliable supply of power whenever the spool is rotating, but also occupy valuable space on the accessory gearbox.

Gas turbine engines also typically have various components, such as gears and bearings, which benefit from lubrication and cooling. An oil supply system supplies oil, or another lubricating liquid, to and from the components to lubricate and cool the components. A typical method of cooling engine oil is by utilizing an air-to-oil heat exchanger. A common source of air for a heat sink is bypass flow from an engine propulsion fan. If the bypass flow is relatively slow, the heat exchanger typically needs to be relatively large and bulky to achieve the desired amount of cooling. A relatively large heat exchanger undesirably increases the weight of an aircraft. In gas turbine engines where the heat exchanger is positioned in a bypass flow stream of the engine's propulsion fan, the heat exchanger can also reduce overall thrust output.

EP 0943069 B1 discloses a power plant that includes an annular combustor, a rotor and stator, a turbine comprising a plurality of blades secured to the rotor, and a compressor. Air flows toward the compressor blades along a flow path defined between an outer shroud and an oil sump. The air flow cools the oil contained in the sump, and the air is then compressed by the compressor blades.

WO 02/37046 A2 discloses a turbogenerator cooling system having a cylindrical heat sink into which is press-fitted the generator stator. The generator rotor is fitted with a small fan for directing heated air away from the inlet of the engine.

### SUMMARY

According to a first aspect of the present invention there is provided a gas turbine engine comprising: a heat exchanger positioned in a gas flow path and fluidically connected to the gas turbine engine for cooling lubricating liquid used by the gas turbine engine; a high pressure spool; and a permanent magnet alternator for powering a gas turbine engine controller, the permanent magnet alternator comprising: a housing defining a portion of the gas flow path; a permanent magnet alternator stator attached to the housing; a shaft rotatable with respect to the housing; a permanent magnet alternator rotor attached to the shaft and positioned with respect to the permanent magnet alternator stator so as to generate electricity when the shaft rotates; and a cooling fan attached to the shaft and having fan blades positioned in the gas flow path for flowing air through the gas flow path, wherein the shaft is connected to and driven by the high pressure spool and the cooling fan is arranged to flow air over the heat exchanger, characterized in that the gas turbine engine further comprises an accessory gearbox connecting the shaft to the high pressure spool of the gas turbine engine.

According to a second aspect of the present invention there is provided a method of generating electrical power and cooling lubricating liquid on a gas turbine engine, the method comprising: rotating an alternator shaft driven by a spool of a gas turbine engine; generating electrical power via an alternator having a rotor connected to the alternator shaft; flowing air through a gas flow path via a cooling fan attached to the shaft; and cooling lubricating liquid via a heat exchanger positioned in the gas flow path, characterized by rotating the alternator shaft via an accessory gearbox driven by the spool.

### BRIEF DESCRIPTION OF THE DRAWINGS

FIG. 1 is a schematic view of a gas turbine engine having an integrated permanent magnet alternator and cooling fan system.
FIG. 2 is side view of the integrated permanent magnet alternator and cooling fan system of FIG. 1.
FIG. 3 is a perspective cross sectional view of the integrated permanent magnet alternator and cooling fan system of FIG. 1.

### DETAILED DESCRIPTION

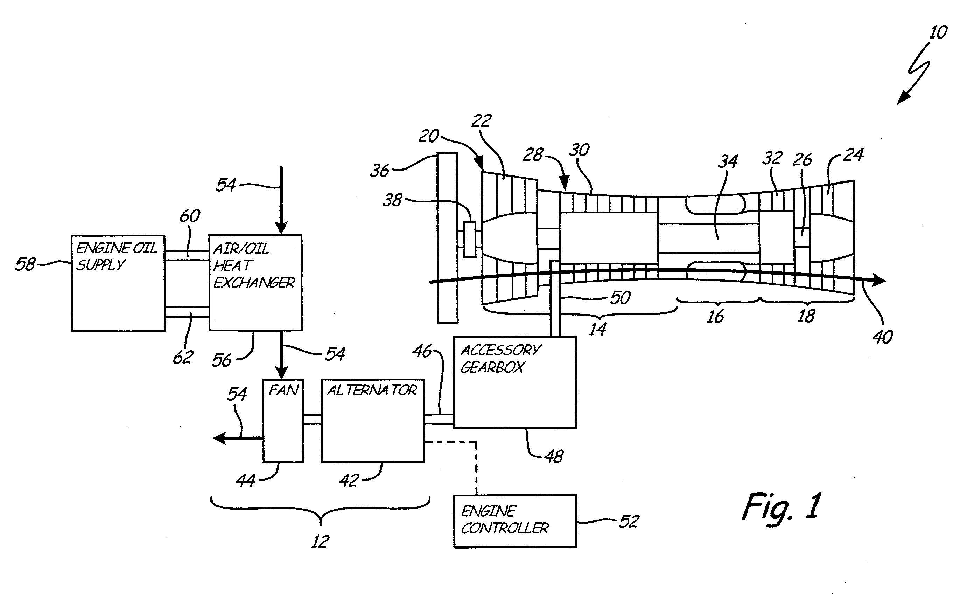

FIG. 1 is a schematic view of gas turbine engine 10 having integrated permanent magnet alternator (PMA) and cooling fan system 12 (integrated system 12). Gas turbine engine 10 includes main compressor section 14, main combustor section 16, and main turbine section 18. Low pressure spool 20 (which includes low pressure compressor 22 and low pressure turbine 24 connected by low pressure shaft 26) and high pressure spool 28 (which includes high pressure compressor 30 and high pressure turbine 32 connected by high pressure shaft 34) each extend from main compressor section 14 to main turbine section 18. Propulsion fan 36 is connected to and driven by low pressure spool 20. A fan drive gear system 38 may be included between the propulsion fan 36 and low pressure spool 20. Air flows from main compressor section 14 to main turbine section 18 along engine gas flow path 40. The general construction and operation of gas turbine engines is well-known in the art, and therefore detailed discussion here is unnecessary.

Integrated system 12 includes alternator 42 and cooling fan 44, both connected to shaft 46. Thus, shaft 46 is both an alternator shaft and a fan shaft. Accessory gearbox 48 is connected to integrated system 12 by shaft 46 and to high pressure spool 28 by shaft 50. In operation, shaft 50, shaft 46, alternator 42, and cooling fan 44 all rotate when high pressure spool 28 rotates. When shaft 46 rotates, alternator 42 generates electric power, which is supplied to engine controller 52. Engine controller 52 controls operation of gas turbine engine 10. Because alternator 42 generates power whenever high pressure spool 28 rotates, engine controller 52 can have a relatively reliable supply of electric power substantially whenever gas turbine engine 10 is operating. Alternator 42 can be dedicated to power only components on gas turbine engine 10. In the illustrated embodiment, alternator 42 powers only engine controller 52. By limiting the components which alternator 42 is used to power, alternator 42 can be a relatively small permanent magnet alternator.

Also when shaft 46 rotates, cooling fan 44 creates a pressure rise in cooling fan gas flow path 54. In the illustrated embodiment, cooling fan 44 is positioned downstream of heat exchanger 56 along cooling fan gas flow path 54. Thus, cooling fan 44 provides suction to draw a gas, such as air, over heat exchanger 56 when cooling fan 44 rotates. In alternative embodiments, cooling fan 44 can be positioned upstream of heat exchanger 56.

Heat exchanger 56 is fluidically connected to engine oil supply 58 by supply line 60 and return line 62. Heat exchanger 56 receives warm oil from engine oil supply 58 along supply line 60, and returns cool oil to engine oil supply 58 along return line 62. Engine oil supply 58 supplies oil to and scavenges oil from various gears, bearings, and other components of gas turbine engine 10, including accessory gearbox 48 and optionally, fan drive gear system 38.

Thus, integrated system 12 can be used both to generate electrical power for engine controller 52 and to cool oil used in gas turbine engine 10.

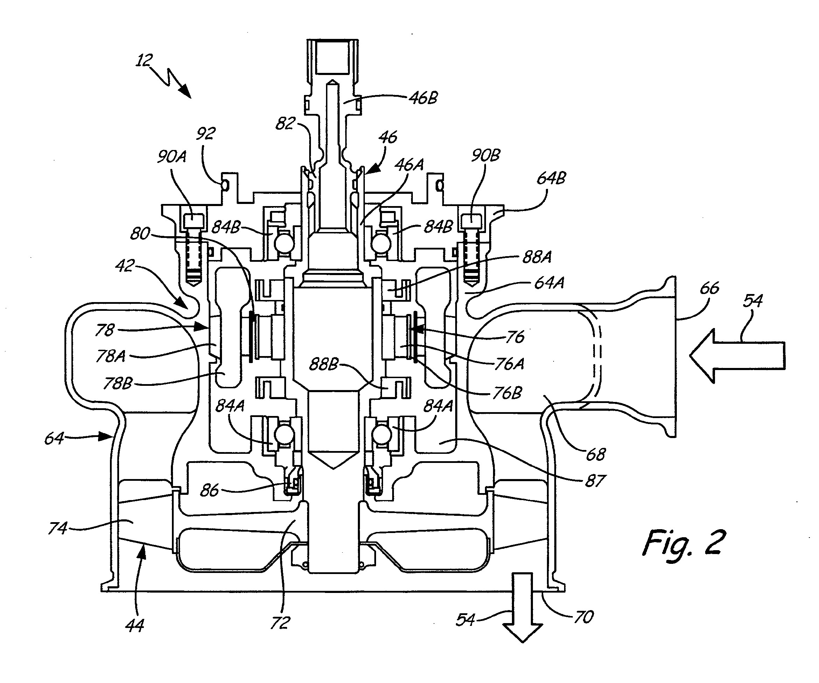

FIG. 2 is a side view of integrated system 12. Alternator 42 and cooling fan 44 are both positioned substantially inside housing 64. Thus, housing 64 is both an alternator housing and a fan housing. Housing 64 also defines and contains a portion of cooling fan gas flow path 54, and includes fan inlet 66, plenum 68, and fan outlet 70. Cooling fan 44 draws air from heat exchanger 56 (shown in FIG. 1) through fan inlet 66 into plenum 68 and then blows that air through fan outlet 70.

Cooling fan 44 includes hub 72 connected to shaft 46 and fan blades 74 connected to and extending substantially radially outward from hub 72. Fan blades 74 are positioned in cooling fan gas flow path 54. In the illustrated embodiment, fan 54 is an axial flow fan. In other embodiments, cooling fan 54 can be another type of fan, such as a radial flow fan, suitable for speed and flow requirements of a particular application.

Alternator 42 includes permanent magnet alternator (PMA) rotor 76 attached to fan shaft 46 and includes PMA stator 78 attached to housing 64. PMA rotor 76 includes rotor magnets 76A and rotor containment band 76B. PMA stator 78 includes stator laminations 78A and stator windings 78B. Air gap 80 spaces PMA rotor 76 from PMA stator 78. PMA rotor 76 is positioned with respect to PMA stator 78 so as to generate electricity when shaft 46 rotates. Fan inlet 66 and plenum 68 of cooling fan gas flow path 54 are positioned radially outward from both PMA rotor 76 and PMA stator 78. Fan outlet 70 is positioned substantially radially outward from both PMA rotor 76 and PMA stator 78.

Shaft 46 is positioned partially inside and rotatable with respect to housing 64. In the illustrated embodiment, shaft 46 includes main shaft 46A connected to input shaft 46B at splined coupling 82. Shaft 46 is supported with respect to housing 64 via bearings 84A and 84B. Shaft seal 86 is positioned between shaft 46 and housing 64 and between cooling fan 44 and alternator 42. Shaft seal 86 allows shaft 46 to rotate with respect to housing 64 while restricting airflow between cooling fan 44 and internal cavity 87 of alternator 42. Balancing rings 88A and 88B are positioned on shaft 46 on each side of PMA rotor 76. Input shaft 46B extends into and is connected to gearing of accessory gearbox 48 (shown in FIG. 1).

In the illustrated embodiment, housing 64 includes housing main portion 64A and housing input cover 64B. Housing input cover 64B is connected to housing main portion 64A via bolts 90A and 90B. Housing input cover 64B connects housing 64 to accessory gearbox 48. Housing input cover 64B includes seal ring 92 for sealing its connection to accessory gearbox 48.

Because cooling fan 44 and PMA rotor 76 are both mounted on the same shaft 46, cooling fan 44 and PMA rotor 76 will rotate at the same speed. Thus, cooling fan 44 and alternator 42 can both operate relatively efficiently at the same time if cooling fan 44 and alternator 42 are designed and sized to operate over a common operating speed range. In the illustrated embodiment, both cooling fan 44 and alternator 42 are sized and designed to operate between about 20,000 revolutions per minute (rpm) and about 34,000 rpm. Such speeds are suitable for alternator 42 to provide sufficient power to engine controller 52 and for cooling fan 44 to draw a sufficient amount of air over heat exchanger 56. This allows heat exchanger 56 to be relatively small and light weight as compared to a heat exchanger without the assistance of cooling fan 44. In alternative embodiments, cooling fan 44 and alternator 42 can be sized and designed for other operating speeds so long as those speeds are suitable for their application.

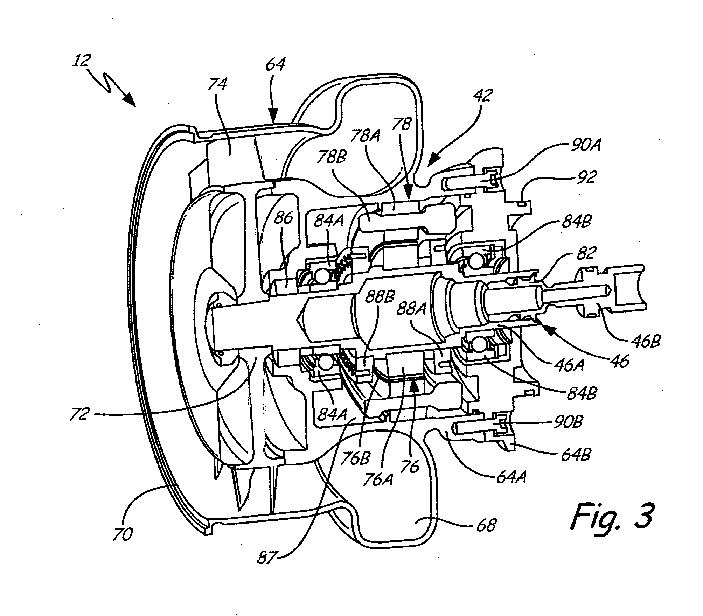

FIG. 3 is perspective cross sectional view of one embodiment of integrated system 12. As illustrated in FIG. 3, fan inlet 66 (shown in FIG. 2) is hidden behind housing 64. Plenum 68 is shown to have a substantially torus shape with a hollow interior for holding air prior to that air flowing through cooling fan 44.

Thus, integrated system 12 can be used not only to power engine controller 52 but also to cool oil in engine oil supply 58 of gas turbine engine 10. By attaching cooling fan 44 to shaft 46 along with alternator 42, cooling fan 44 can be driven by high pressure spool 28 through accessory gearbox 48 without having to attach cooling fan 44 to its own gear center location on accessory gearbox 48. This allows accessory gearbox 48 to be relatively small. By using cooling fan 44 to increase air flow through heat exchanger 56, heat exchanger 56 can be relatively small, while still providing the same amount of cooling as that of a larger heat exchanger having less air flow. Having a relatively small heat exchanger 56 and accessory gearbox 48 allows the overall weight of gas turbine engine 10 to be relatively small. Using cooling fan 44 to draw air through heat exchanger 56 also allows for heat exchanger 56 to be positioned in locations other than in a bypass flow stream of propulsion fan 36, thus increasing the effective thrust of propulsion fan 36. Combining alternator 42 and cooling fan 44 together allows for electrical power production and oil cooling to be performed by one relatively simple, small, and light-weight system.

It is intended that the invention not be limited to the particular embodiments disclosed, but that the invention will include all embodiments falling within the scope of the appended claims. For example, cooling fan gas flow path 54 need not be shaped precisely as illustrated, so long as alternator 42 and cooling fan 44 are both suitably connected to shaft 46 as part of integrated system 12.

## Claims

1. A gas turbine engine (10) comprising:
a heat exchanger (56) positioned in a gas flow path (54) and fluidically connected to the gas turbine engine for cooling lubricating liquid used by the gas turbine engine;
a high pressure spool (28); and
a permanent magnet alternator (42) for powering a gas turbine engine controller (52), the permanent magnet alternator comprising:
a housing (64) defining a portion of the gas flow path (54);
a permanent magnet alternator stator (78) attached to the housing;
a shaft (46) rotatable with respect to the housing;
a permanent magnet alternator rotor (76) attached to the shaft and positioned with respect to the permanent magnet alternator stator so as to generate electricity when the shaft rotates; and
a cooling fan (44) attached to the shaft and having fan blades (74) positioned in the gas flow path (54) for flowing air through the gas flow path,
wherein the shaft (46) is connected to and driven by the high pressure spool (28) and the cooling fan (44) is arranged to flow air over the heat exchanger, and
wherein the gas turbine engine further comprises an accessory gearbox (48) connecting the shaft (46) to the high pressure spool (28) of the gas turbine engine.

2. The gas turbine engine of claim 1, wherein the gas flow path (54) is positioned substantially radially outward from the permanent magnet alternator stator (78).

3. The gas turbine engine of claim 1 or 2, wherein the cooling fan (44) is an axial flow fan.

4. The gas turbine engine (10) of any preceding claim, further comprising:
an engine controller (52) electrically connected to and powered by the alternator (42), preferably wherein the alternator powers only the engine controller.

5. The gas turbine engine (10) of any preceding claim, wherein the heat exchanger (56) is positioned in the gas flow path upstream of the cooling fan (44).

6. A method of generating electrical power and cooling lubricating liquid on a gas turbine engine (10), the method comprising:
rotating an alternator shaft (46) driven by a spool (28) of a gas turbine engine;
generating electrical power via an alternator (42) having a rotor (76) connected to the alternator shaft;
flowing air through a gas flow path (54) via a cooling fan (44) attached to the shaft;
cooling lubricating liquid via a heat exchanger (56) positioned in the gas flow path, and
rotating the alternator shaft (46) via an accessory gearbox (48) driven by the spool (28).

7. The method of claim 6, further comprising:
flowing warm lubricating liquid from components of the gas turbine engine to the heat exchanger (56) ; and
flowing cooled lubricating liquid from the heat exchanger to components of the gas turbine engine (10).

8. The method of claim 6 or 7, wherein the shaft (46) rotates between about 20,000 revolutions per minute and 34,000 revolutions per minute.

9. The method of claim 6, 7 or 8, wherein the cooling fan (44) draws air through the heat exchanger (56).

10. The method of any of claims 6 to 9, further comprising:
powering an engine controller (52) via the alternator (42).

11. The method of any of claims 6 to 10, wherein the alternator (42) powers only components on the gas turbine engine (10).

12. The method of any of claims 6 to 11, wherein the alternator (42) powers only the engine controller (52).

## Patentansprüche

1. Gasturbine (10), umfassend:
- einen Wärmetauscher (56), der auf einem Gasströmungsweg (54) positioniert ist und fluidisch an die Gasturbine angeschlossen ist, um eine Schmierflüssigkeit zu kühlen, die von der Gasturbine verwendet wird;
- eine Hochdrucktrommel (28); und
- einen Dauermagnet-Wechselstromerzeuger (42) zur Energieversorgung eines Gasturbinen-Steuergeräts (52), wobei der Dauermagnet-Wechselstromerzeuger Folgendes umfasst:
- ein Gehäuse (64), das einen Teil des Gasströmungswegs (54) definiert;
- einen Stator (78) des Dauermagnet-Wechselstromerzeugers, der an dem Gehäuse angebracht ist;
- eine Welle (46), die im Verhältnis zu dem Gehäuse drehbar ist;
- einen Rotor (76) des Dauermagnet-Wechselstromerzeugers, der an der Welle angebracht ist und im Verhältnis zu dem Stator des Dauermagnet-Wechselstromerzeugers derart positioniert ist, dass er Elektrizität generiert, wenn sich die Welle dreht; und
- ein Kühlgebläse (44), das an der Welle angebracht ist und Gebläseflügel (74) aufweist, die auf dem Gasströmungsweg (54) positioniert sind, um Luft über den Gasströmungsweg strömen zu lassen,
wobei die Welle (46) an die Hochdrucktrommel (28) angeschlossen ist und von dieser angetrieben wird, und wobei die Gasturbine ferner ein Hilfsgetriebe (48) umfasst, und wobei die Gasturbine ferner ein Hilfsgetriebe (48) umfasst, das die Welle (46) an die Hochdrucktrommel (28) der Gasturbine anschließt.

2. Gasturbine nach Anspruch 1, wobei der Gasströmungsweg (54) von dem Stator (78) des Dauermagnet-Wechselstromerzeugers aus im Wesentlichen radial nach außen positioniert ist.

3. Gasturbine nach Anspruch 1 oder 2, wobei das Kühlgebläse (44) ein Axialgebläse ist.

4. Gasturbine (10) nach einem der vorhergehenden Ansprüche, ferner umfassend:
- ein Turbinensteuergerät (52), das elektrisch an den Wechselstromerzeuger (42) angeschlossen und von diesem mit Energie versorgt wird, wobei der Wechselstromerzeuger bevorzugt nur das Turbinensteuergerät mit Energie versorgt.

5. Gasturbine (10) nach einem der vorhergehenden Ansprüche, wobei der Wärmetauscher (56) auf dem Gasströmungsweg stromaufwärts von dem Kühlgebläse (44) positioniert ist.

6. Verfahren zum Generieren elektrischer Energie und zum Kühlen von Schmierflüssigkeit an einer Gasturbine (10), wobei das Verfahren folgende Schritte umfasst:
- Drehen einer Wechselstromerzeugerwelle (46), die von einer Trommel (28) einer Gasturbine angetrieben wird;
- Generieren von elektrischer Energie über einen Wechselstromerzeuger (42), der einen Rotor (76) aufweist, der an die Wechselstromerzeugerwelle angeschlossen ist;
- Strömen lassen von Luft über einen Gasströmungsweg (54) anhand eines Kühlgebläses (44), das an der Welle angebracht ist;
- Kühlen von Schmierflüssigkeit anhand eines Wärmetauschers (56), der auf dem Gasströmungsweg positioniert ist; und
- Drehen der Wechselstromerzeugerwelle (46) anhand eines Hilfsgetriebes (48), das von der Trommel (28) angetrieben wird.

7. Verfahren nach Anspruch 6, ferner umfassend folgende Schritte:
- Strömen lassen von warmer Schmierflüssigkeit von den Komponenten der Gasturbine zu dem Wärmetauscher (56); und
- Strömen lassen von abgekühlter Schmierflüssigkeit von dem Wärmetauscher zu den Komponenten der Gasturbine (10).

8. Verfahren nach Anspruch 6 oder 7, wobei sich die Welle (46) mit zwischen ungefähr 20.000 Umdrehungen pro Minute und 34.000 Umdrehungen pro Minute dreht.

9. Verfahren nach Anspruch 6, 7 oder 8, wobei das Kühlgebläse (44) Luft durch den Wärmetauscher (56) ansaugt.

10. Verfahren nach einem der Ansprüche 6 bis 9, ferner umfassend die Energieversorgung eines Turbinensteuergeräts (52) anhand des Wechselstromerzeugers (42).

11. Verfahren nach einem der Ansprüche 6 bis 10, wobei der Wechselstromerzeuger (42) nur Komponenten an der Gasturbine (10) mit Energie versorgt.

12. Verfahren nach einem der Ansprüche 6 bis 11, wobei der Wechselstromerzeuger (42) nur das Turbinensteuergerät (52) mit Energie versorgt.

## Revendications

1. Moteur (10) de turbine à gaz comprenant :
un échangeur de chaleur (56) positionné dans une voie (54) d'écoulement de gaz et raccordé de manière fluidique au moteur de la turbine à gaz en vue de refroidir du liquide lubrifiant utilisé par le moteur de la turbine à gaz ;
un tambour à haute pression (28) ; et
un alternateur à aimant permanent (42) permettant d'alimenter électriquement un contrôleur (52) de moteur de turbine à gaz, l'alternateur à aimant permanent comprenant :
un carter (64) définissant une partie de la voie (54) d'écoulement de gaz ;
un stator (78) d'alternateur à aimant permanent attaché au carter ;
un arbre (46) qui peut tourner par rapport au carter ;
un rotor (76) d'alternateur à aimant permanent attaché à l'arbre et positionné par rapport au stator d'alternateur à aimant permanent de manière à produire de l'électricité lorsque l'arbre tourne ; et
un ventilateur de refroidissement (44) attaché à l'arbre et comportant des pales de ventilateur (74) positionnées dans la voie (54) d'écoulement de gaz afin de faire circuler de l'air à travers la voie d'écoulement de gaz,
dans laquelle l'arbre (46) est raccordé au tambour à haute pression (28) et entraîné par celui-ci, et où le moteur de la turbine à gaz comprend en outre une boîte d'engrenages accessoire (48), le moteur de la turbine à gaz comprenant en outre une boîte d'engrenages accessoire (48) reliant l'arbre (46) au tambour à haute pression (28) du moteur de la turbine à gaz.

2. Moteur de la turbine à gaz selon la revendication 1, dans lequel la voie (54) d'écoulement de gaz est positionnée sensiblement radialement vers l'extérieur du stator (78) d'alternateur à aimant permanent.

3. Moteur de la turbine à gaz selon la revendication 1 ou 2, dans lequel le ventilateur de refroidissement (44) est un ventilateur à débit axial.

4. Moteur (10) de turbine à gaz selon l'une quelconque des revendications précédentes, comprenant en outre :
un contrôleur de moteur (52) connecté électriquement à l'alternateur (42) et alimenté par celui-ci, l'alternateur alimentant de préférence uniquement le contrôleur de moteur.

5. Moteur (10) de turbine à gaz selon l'une quelconque des revendications précédentes, dans lequel l'échangeur de chaleur (56) est positionné dans la voie d'écoulement de gaz en amont du ventilateur de refroidissement (44).

6. Procédé de production d'énergie électrique et de refroidissement de liquide lubrifiant sur un moteur (10) de turbine à gaz, ce procédé comprenant :
la rotation d'un arbre d'alternateur (46) entraîné par un tambour (28) d'un moteur de la turbine à gaz ;
la production d'énergie électrique par le biais d'un alternateur (42) comportant un rotor (76) relié à l'arbre de l'alternateur ;
la circulation d'air à travers une voie (54) d'écoulement de gaz par le biais d'un ventilateur de refroidissement (44) attaché à l'arbre ;
le refroidissement du liquide lubrifiant par le biais d'un échangeur de chaleur (56) positionné dans la voie d'écoulement de gaz, et
la rotation de l'arbre d'alternateur (46) par le biais d'une boîte d'engrenages accessoire (48) entraînée par le tambour (28).

7. Procédé selon la revendication 6, comprenant en outre :
l'écoulement de liquide lubrifiant tiède à partir des composants du moteur de la turbine à gaz jusqu'à l'échangeur de chaleur (56) ; et
l'écoulement de liquide lubrifiant tiède à partir de l'échangeur de chaleur jusqu'aux composants du moteur (10) de turbine à gaz.

8. Procédé selon la revendication 6 ou 7, dans lequel l'arbre (46) tourne entre environ 20 000 et 34 000 tours par minute.

9. Procédé selon la revendication 6, 7 ou 8, dans lequel le ventilateur de refroidissement (44) aspire de l'air à travers l'échangeur de chaleur (56).

10. Procédé selon l'une quelconque des revendications 6 à 9, comprenant en outre :
l'alimentation d'un contrôleur de moteur (52) par le biais de l'alternateur (42).

11. Procédé selon l'une quelconque des revendications 6 à 10, dans lequel l'alternateur (42) n'alimente que les composants présents sur le moteur (10) de turbine à gaz.

12. Procédé selon l'une quelconque des revendications 6 à 11, dans lequel l'alternateur (42) n'alimente que le contrôleur de moteur (52).
